# EUROPÄISCHE PATENTSCHRIFT

(11) **EP 1 303 697 B1**
(45) Veröffentlichungstag und Bekanntmachung des Hinweises auf die Patenterteilung: **20.10.2004**
(21) Anmeldenummer: 01955231.4
(22) Anmeldetag: 13.07.2001
(51) Int. Cl.: F02M 45/08, F02M 61/18, F02M 51/06

(54) **BRENNSTOFFEINSPRITZVENTIL**
FUEL INJECTION VALVE
SOUPAPE D'INJECTION DE CARBURANT

(30) Priorität: 15.07.2000 DE 10034444
(43) Veröffentlichungstag der Anmeldung: 23.04.2003
(73) Patentinhaber: ROBERT BOSCH GMBH, 70442 Stuttgart (DE)
(72) Erfinder: ARNDT, Stefan, 70569 Stuttgart (DE); HERDEN, Werner, 70839 Gerlingen (DE); MAIER, Martin, 71696 Moeglingen (DE); HOHL, Guenther, 70569 Stuttgart (DE)
(86) Internationale Anmeldenummer: PCT/DE2001/002548
(87) Internationale Veröffentlichungsnummer: WO 2002/006665

(56) Entgegenhaltungen:
- EP-A- 0 967 382
- US-A- 5 706 778
- PATENT ABSTRACTS OF JAPAN vol. 1996, no. 05, 31. Mai 1996 (1996-05-31) & JP 08 004625 A (ISUZU MOTORS LTD), 9. Januar 1996 (1996-01-09)

## Beschreibung

### Stand der Technik

Die Erfindung geht aus von einem Brennstoffeinspritzventil nach der Gattung des Hauptanspruchs.

Es ist bereits ein Brennstoffeinspritzventil bekannt, das eine Ventilnadel aufweist, die durch einen Aktor betätigt wird. Der Aktor besteht z.B. aus einer elektromagnetischen Spüle oder einem Piezoelement. Ein beispielhaftes, gattungsgemäßes Brennstoffeinspritzventil mit elektromagnetischer Spule ist in der DE 35 40 660 C2 beschrieben. Das Brennstoffeinspritzventil weist ein Ventilgehäuse auf, in dem auf einem Spulenträger eine Magnetspule angeordnet ist. Eine Ventilnadel mit einstückig an dieser ausgebildetem Ventilschließkörper wirkt mit einer Ventilsitzfläche zu einem Dichtsitz zusammen. An ihrem der Magnetspule zugewandten Ende ist die Ventilnadel mit einem Anker fest verbunden und wird von einer Rückstellfeder gegen den Dichtsitz beaufschlagt. Fließt durch die Magnetspule ein Strom, so wird der Anker gegen die Kraft der Rückstellfeder angezogen und hebt die Ventilnadel von ihrem Dichtsitz ab. Durch eine sich an den Ventilsitz anschließende Abspritzbohrung kann nun der Brennstoff austreten.

Nachteilig bei diesem bekannten Brennstoffeinspritzventil ist, daß der Winkel, unter dem die Einspritzung erfolgt, festgelegt ist und die Menge des Brennstoffs nur sehr eingeschränkt geregelt werden kann. Eine Anpassung an verschiedene Betriebszustände, wie sie insbesondere bei Magermixkonzepten und Schichtladeverfahren in Kombination mit Direkteinspritzung in den Brennraum notwendig ist, kann nur sehr schwer oder gar nicht erfolgen. Hierzu ist es nötig, verschiedenen Betriebszuständen mit in der Richtung unterschiedlichen Einspritzwinkel zu erreichen.

Aus der DE 32 28, 079 A1 ist ein Brennstoffeinspritzventil bekannt, das zwei Ventilnadeln aufweist. Zur Umsetzung von Brennstoff unter Mitteldruck in Brennstoff unter Hochdruck weist das Brennstoffeinspritzventil einen Stufenkolben auf. Beide Ventilnadeln werden von jeweils einer Feder gegen jeweils einen Dichtsitz beaufschlagt. Wird die eine Ventilnadel um einen gewissen Vorhub aus ihrem Dichtsitz angehoben, so schlägt sie gegen einen Anschlag der anderen Ventilnadel an und nimmt beim weiteren Hub diese Ventilnadel mit. Die beiden Dichtsitze der beiden Ventilnadeln verschließen unterschiedliche Abspritzöffnungen, die unter unterschiedlichen Winkeln ausgerichtet sein können. Jedoch kann nicht, wie bei einem durch einen Aktor gesteuerten Brennstoffeinspritzventil, eine weitgehende und individuelle Anpassung an ein Kennfeld einer Brennkraftmaschine erfolgen. Auch ist der Aufbau vielteilig und führt die Zwischenschaltung eines Stufenkolbens zu einer gewissen Trägheit des Brennstoffeinspritzventils bezüglich seines Ansprechverhalten.

Aus der DE 30 48 304 A1 ist ein Brennstoffeinspritzventil für Brennkraftmaschinen mit einer Ventilnadel und einer Hilfsnadel in einer Bohrung der Ventilnadel bekannt. Die Ventilnadel wirkt an ihrem brennraumseitig als Ventilschließkörper ausgebildeten Abschnitt mit einer Ventilsitzfläche zu einem Dichtsitz zusammen, der Abspritzbohrungen von einem Brennstoffzulauf trennt. Die in der Ventilnadel geführte Hilfsnadel weist ebenfalls einen Ventilschließkörper auf, der mit einer zweiten Ventilsitzfläche des Brennstoffeinspritzventils zusammenwirkt. Durch eine in der Ventilnadel gelegene Feder wird die Hilfsnadel gegen die Ventilnadel gezogen, zu der hin sie ebenfalls mit einer Ventilsitzfläche in der Ventilnadel einen Dichtsitz bildet. Wenn das hydraulisch betätigte Brennstoffeinspritzventil durch Anstieg des Druckes in der Brennstoffzuleitung zu öffnen beginnt, so wird die Hilfsnadel aus ihrem Dichtsitz in der Ventilnadel gegen den Dichtsitz im Ventilkörper gedrückt und verschließt eine Gruppe von Abspritzbohrungen, während eine weitere Gruppe von Abspritzbohrungen geöffnet ist. Steigt der Druck weiter an, so wird die Ventilnadel von ihrem Dichtsitz abgehoben'und nimmt nach einem bestimmten Hub die Hilfsnadel mit, die gegen einen Anschlag der Ventilnadel anschlägt. Alle Abspritzbohrungen werden dann freigegeben. Nachteilig ist, daß die Ansteuerung des Ventilnadelhubes allein über den Druck des Brennstoffes erfolgt und eine Anpassung an ein Kennfeld einer Brennkraftmaschine daher nur eingeschränkt möglich ist.

Aus der DE 27 11 391 A1 ist ein Brennstoffeinspritzventil mit einem Stellkolben zur Regelung des maximalen Hubes einer Ventilnadel bekannt. Die Ventilnadel ist von einer Feder in Schließrichtung beaufschlagt und wirkt mit einer Ventilsitzfläche zu einem Dichtsitz zusammen. Die Steuerung der Ventilnadel erfolgt rein hydraulisch. Durch den ebenfalls hydraulisch in seinem Hub verstellbaren Stellkolben wird der Hub der Ventilnadel begrenzt bzw. vollständig verhindert. Die Ansteuerung dieses Stellkolbens erfolgt durch 'eine eigene Zuleitung. Je nach' Hub des Stellkolbens kann die Durchflußmenge an Brennstoff begrenzt werden. Nachteilig an dem Brennstoffeinspritzventil ist, daß der Aufbau vielteilig und aufwendig und somit teuer in der Herstellung ist.

Aus der EP 0 967 382 A2 ist bereits ein Brennstoffeinspritzventil bekannt, bei dem ein Aktor mit einer Ventilnadel zusammenwirken kann. Dabei wirkt ein an der Ventilnadel angeordneter erster Ventilschließkörper mit einer ersten Ventilsitzfläche an einem Ventilsitzkörper zu einem ersten Dichtsitz zusammen. Außerdem ist innerhalb der Ventilnadel ein zweiter Ventilschließkörper vorgesehen, der mit einer zweiten Ventilsitzfläche an dem Ventilsitzkörper zu einem zweiten Dichtsitz zusammenwirkt. Die Ventilnadel bzw. der erste Ventilschließkörper weist einen Anschlag auf, an dem nach einem Teilhub der Ventilnadel ein Gegenanschlag des zweiten Ventilschließkörpers anschlägt und den zweiten Ventilschließkörper bei weiterem Hub der Ventilnadel aus dem zweiten Dichtsitz anhebt. Der Ventilsitzkörper weist einen ersten umfänglichen Lochkreis mit mehreren Abspritzbohrungen auf, die in dem Ventilsitzkörper so angeordnet sind, dass der erste Dichtsitz den ersten Lochkreis gegenüber einem Brennstoffzulauf aus einer die Ventilnadel äußerlich umgebenden Zuströmkammer abdichtet. In der Teilhubphase der Ventilnadel, also bei geöffnetem ersten Dichtsitz und noch verschlossenem zweiten Dichtsitz, steht der Brennstoff aus der gleichen Zuströmkammer kommend am zweiten Dichtsitz an. Diese bekannte Konstruktion der Ventilnadel erlaubt ausschließlich, dass durch das erste Anheben der Ventilnadel der erste äußere Lochkreis mit den Abspritzbohrungen freigegeben wird, während der zweite innere, durch den zweiten Dichtsitz vorerst verschlossene Lochkreis mit den inneren Abspritzbohrungen grundsätzlich nachfolgend geöffnet wird.

### Vorteile der Erfindung

Das erfindungsgemäße Brennstoffeinspritzventil mit den kennzeichnenden Merkmalen des Anspruchs 1 hat demgegenüber den Vorteil, eine an die Erfordernisse des Kennfelds und insbesondere eines Magermixkonzeptes angepaßte Verteilung des Brennstoffs im Brennraum einer Brennkraftmaschine zu ermöglichen.

Insbesondere kann der Winkel, unter dem sich der Brennstoff im Strahlbild des Brennstoffeinspritzventils verteilt, in Abhängigkeit von dem Ventilhub verändert werden. Dies ist bei dem erfindungsgemäßen Brennstoffeinspritzventil durch den zweiten Ventilschließkörper und die Ansteuerung der Ventilnadel durch einen gemeinsamen Aktor gewährleistet. Das Brennstoffeinspritzventil kann in zwei Stufen geöffnet werden, wobei die Dichtsitze nacheinander geöffnet werden.

Durch die in den Unteransprüchen angegebenen Maßnahmen sind vorteilhafte Weiterbildungen und Verbesserungen des in Anspruch 1 angegebenen Brennstoffeinspritzventils möglich.

Vorteilhaft können durch die beiden Dichtsitze der beiden Ventilnadeln zwei verschiedene Lochkreise, bestehend aus Abspritzbohrungen betätigt werden.

Die Abspritzbohrungen der unterschiedlichen Lochkreise können insbesondere verschiedene Abspritzwinkel aufweisen und zueinander versetzt sein. Vorteilhaft kann so bei geringer Einspritzmenge und Last der Brennkraftmaschine zunächst nur ein erster Lochkreis geöffnet werden. Dieser weist z. B. einen engen Abspritzwinkel der Abspritzbohrungen auf, so daß sich ein Brennstoffeinspritzstrahl mit insgesamt engem Winkelbereich bildet. Bei höherer Last der Brennkraftmaschine und entsprechenden Erfordernissen im Schichtladebetrieb einer mit Magermixkonzept betriebenen Brennkraftmaschine werden auch die Abspritzbohrungen des zweiten Lochkreises geöffnet. Diese können unter einem größeren Abspritzwinkel angeordnet sein.

### Zeichnung

Ein Ausführungsbeispiel eines gattungsgemäßen Brennstoffeinspritzventils sowie ein Ausführungsbeispiel der Erfindung sind in den Zeichnungen vereinfacht dargestellt und in der nachfolgenden Beschreibung näher erläutert. Es zeigen:
- Fig. 1: einen Schnitt durch ein gattungsgemäßes Brennstoffeinspritzventil, das eine mittels Aktor betätigte Ventilnadel aufweist,
- Fig. 2: einen Ausschnitt eines Brennstoffeinspritzventils in einer geschnittenen Darstellung,
- Fig. 3: einen Ausschnitt aus einem Ausführungsbeispiel eines erfindungsgemäßen Brennstoffeinspritzventils in einer geschnittenen Darstellung, und
- Fig. 4: einen Ausschnitt eines Brennstoffeinspritzventils in einer geschnittenen Darstellung.

### Beschreibung der Ausführungsbeispiele

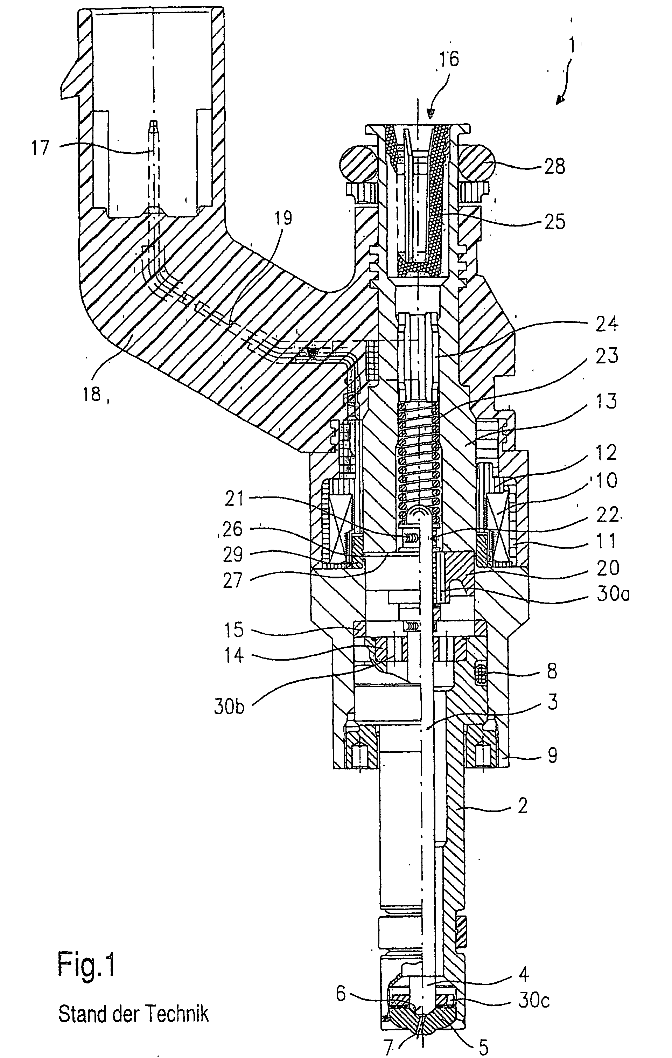

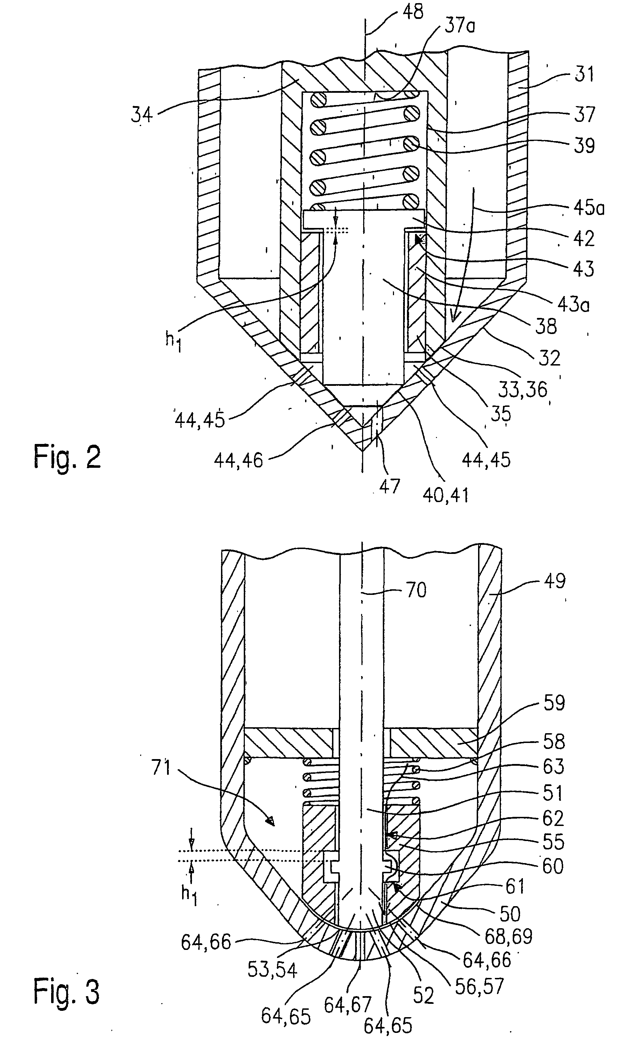

Bevor anhand der Figur 3 ein Ausführungsbeispiel eines erfindungsgemäßen Brennstoffeinspritzventils näher beschrieben wird, soll zum besseren Verständnis der Erfindung zunächst anhand von Fig. 1 ein bereits bekanntes gattungsgemäßes Brennstoffeinspritzventil bezüglich seiner wesentlichen Bauteile kurz erläutert werden.

Das Brennstoffeinspritzventil 1 ist in der Form eines Brennstoffeinspritzventils für Brennstoffeinspritzanlagen von gemischverdichtenden, fremdgezündeten Brennkraftmaschinen ausgeführt. Das Brennstoffeinspritzventil 1 eignet sich insbesondere zum direkten Einspritzen von Brennstoff in einen nicht dargestellten Brennraum einer Brennkraftmaschine.

Das Brennstoffeinspritzventil 1 besteht aus einem Düsenkörper 2, in welchem eine Ventilnadel 3 geführt ist.

Die Ventilnadel 3 steht mit einem Ventilschließkörper 4 in Wirkverbindung, der mit einer auf einem Ventilsitzkörper 5 angeordneten Ventilsitzfläche 6 zu einem Dichtsitz zusammenwirkt. Bei dem Brennstoffeinspritzventil 1 handelt es sich im Ausführungsbeispiel um ein nach innen öffnendes Brennstoffeinspritzventil 1, welches über eine Abspritzöffnung 7 verfügt. Der Düsenkörper 2 ist durch eine Dichtung 8 gegen den Außenpol 9 einer Magnetspule 10, die als Aktor dient, abgedichtet. Die Magnetspule 10 ist in einem Spulengehäuse 11 gekapselt und auf einen Spulenträger 12 gewickelt, welcher an einem Innenpol 13 der Magnetspule 10 anliegt. Der Innenpol 13 und der Außenpol 9 sind durch einen Spalt 26 voneinander getrennt und stützen sich auf einem Verbindungsbauteil 29 ab. Die Magnetspule 10 wird über eine Leitung 19 von einem über einen elektrischen Steckkontakt 17 zuführbaren elektrischen Strom erregt. Der Steckkontakt 17 ist von einer Kunststoffummantelung 18 umgeben, die am Innenpol 13 angespritzt sein kann.

Die Ventilnadel 3 ist in einer Ventilnadelführung 14 geführt, welche scheibenförmig ausgeführt ist. Zur Hubeinstellung dient eine zugepaarte Einstellscheibe 15. An der anderen Seite der Einstellscheibe 15 befindet sich ein Anker 20. Dieser steht über einen Flansch 21 kraftschlüssig mit der Ventilnadel 3 in Verbindung, die durch eine Schweißnaht 22 mit dem Flansch 21 verbunden ist. Auf dem Flansch 21 stützt sich eine Rückstellfeder 23 ab, welche in der vorliegenden Bauform des Brennstoffeinspritzventils 1 durch eine Hülse 24 auf Vorspannung gebracht wird. In der Ventilnadelführung 14, im Anker 20 und am Ventilsitzträger 5 verlaufen Brennstoffkanäle 30a bis 30c, die den Brennstoff, welcher über eine zentrale Brennstoffzufuhr 16 zugeführt und durch ein Filterelement 25 gefiltert wird, zur Abspritzöffnung 7 leiten. Das Brennstoffeinspritzventil 1 ist durch eine Dichtung 28 gegen einen nicht weiter dargestellten Zylinderkopf bzw. einen Brennstoffverteiler abgedichtet.

Im Ruhezustand des Brennstoffeinspritzventils 1 wird der Anker 20 von der Rückstellfeder 23 entgegen seiner Hubrichtung so beaufschlagt, daß der Ventilschließkörper 4 am Ventilsitz 6 in dichtender Anlage gehalten wird. Bei Erregung der Magnetspule 10 baut diese ein Magnetfeld auf, welches den Anker 20 entgegen der Federkraft der Rückstellfeder 23 in Hubrichtung bewegt, wobei der Hub durch einen in der Ruhestellung zwischen dem Innenpol 12 und dem Anker 20 befindlichen Arbeitsspalt 27 vorgegeben ist. Der Anker 20 nimmt den Flansch 21, welcher mit der Ventilnadel 3 verschweißt ist, ebenfalls in Hubrichtung mit. Der mit der Ventilnadel 3 in Wirkverbindung stehende Ventilschließkörper 4 hebt von der Ventilsitzfläche ab und Brennstoff wird über die Abspritzöffnung 7 abgegeben.

Wird der Spulenstrom abgeschaltet, fällt der Anker 20 nach genügendem Abbau des Magnetfeldes durch den Druck der Rückstellfeder 23 vom Innenpol 13 ab, wodurch sich der mit der Ventilnadel 3 in Wirkverbindung stehende Flansch 21 entgegen der Hubrichtung bewegt. Die Ventilnadel 3 wird dadurch in die gleiche Richtung bewegt, wodurch der Ventilschließkörper 4 auf der Ventilsitzfläche 6 aufsetzt und das Brennstoffeinspritzventil 1 geschlossen wird.

Der in Fig. 2 im Schnitt dargestellte Ausschnitt eines Brennstoffeinspritzventils zeigt einen Ventilkörper 31, der einstückig mit einem Ventilsitzkörper 32 ausgebildet ist und der wiederum eine z. B. kegelförmige Ventilsitzfläche 33 aufweist. Eine Ventilnadel 34 ist einstückig mit einem ersten Ventilschließkörper 35 ausgeformt, der mit der Ventilsitzfläche 33 zu einem ersten äußeren Dichtsitz 36 zusammenwirkt. In einer Bohrung 37 der Ventilnadel 34 ist ein zweiter Ventilschließkörper 38 geführt, der von einer Feder 39, die sich gegen einen Bohrungsboden 37a der Ventilnadel 34 abstützt, mit einer Kraft beaufschlagt wird. Der zweite Ventilschließkörper 38 wirkt mit einer zweiten Ventilsitzfläche 40, die in dem Ventilsitzkörper 32 angeordnet ist, zu einem zweiten inneren Dichtsitz 41 zusammen. In der hier beschriebenen Ausführungsform sind erste Ventilsitzfläche 33 und zweite Ventilsitzfläche 40 günstig als eine einzige durchgehende Fläche im Ventilsitzkörper 32 vorgesehen, wodurch sie fertigungstechnisch vorteilhaft gestaltet sind.

Der zweite Ventilschließkörper 38 weist einen Bund 42 auf. Als Anschlag dient eine Abstufung 43 in der Bohrung 37, die hier als eine in die Bohrung 37 eingesetzte Hülse 43a ausgeführt ist. Zwischen dem ersten Dichtsitz 36 und dem zweiten Dichtsitz 41 sind umfänglich Abspritzbohrungen 44 angeordnet, die einen ersten äußeren Lochkreis 45 bilden. Weitere Abspritzbohrungen 44 sind so angeordnet, daß sie sowohl von dem ersten Dichtsitz 36, wie auch vom zweiten Dicht,sitz 41 gegenüber einem Brennstoffzulauf 45a, hier durch einen Pfeil angedeutet, abgedichtet werden und einen zweiten inneren Lochkreis 46 bilden. Weiter ist eine zentral gerichtete Absprit.zbohrung 47 vorhanden, die zusätzlich zu den beiden Lochkreisen 45 und 46 einen Brennstoffstrahl in Richtung einer Längsachse 48 des Brennstoffeinspritzventils 1 abgibt. Die Abspritzbohrung 47 kann auch zum inneren Lochkreis 46 gehören.

Wird die Ventilnadel 34 durch den Aktor aus ihrem ersten Dichtsitz 36 angehoben, so wird zunächst nur der erste Lochkreis 45 mit seinen Abspritzbohrungen 44 freigegeben. Erst wenn nach einem Teilhub h₁ der Bund 42 des zweiten Ventilschließkörpers 38 am Anschlag 43 der Ventilnadel 34 zum Anliegen kommt, wird der zweite Ventilschließkörper 38 ebenfalls aus seinem Dichtsitz 41 angehoben, und es werden die Abspritzbohrungen 44, 47 des zweiten Lochkreises 46 bzw. der zentral gerichteten Abspritzbohrung 47 freigegeben. Dadurch ist es möglich, den Winkel, unter dem sich der Brennstoffeinspritzstrahl auffächert, individuell und angepaßt an die Bedürfnisse eines Schichtladekonzeptes bzw. Magermixkonzeptes anzupassen. Es ist möglich, die Ventilnadel 34 nur mit einem Hub, der kleiner ist als der Teilhub h₁, zu öffnen. Wenn nun die Abspritzbohrungen 44 des ersten Lochkreises 45 einen kleineren Winkel zur Längsachse 48 aufweisen, so fächert sich der entstehende und hier nicht dargestellte Brennstoffeinspritzstrahl im Brennraum nur unter einem kleinen Winkel auf. Wird dagegen eine breite Auffächerung des Brennstoffeinspritzstrahles unter einem großen Winkel gewünscht, so kann durch einen Gesamthub der Ventilnadel 34, der größer ist als der Teilhub h_{1,} auch der zweite Ventilschließkörper 38 von seinem Dichtsitz 41 abgehoben werden, und beide Lochkreise 45, 46 sind geöffnet. Durch die zusätzlich geöffneten Abspritzbohrungen 44, die einen anderen Winkel aufweisen können, kann nun eine andere Form des Brennstoffeinspritzstrahles erreicht werden.

Fig. 3 zeigt einen Ausschnitt eines erfindungsgemäßen Brennstoffeinspritzventils in einer geschnittenen Darstellung des unteren Abschnitts, der dem hier nicht dargestellten Brennraum zugewandt ist. Ein Ventilkörper 49 ist mit einem Ventilsitzkörper 50 einstückig ausgebildet. Eine Ventilnadel 51, die einstückig mit einem ersten Ventilschließkörper 52 ausgebildet ist, wirkt mit einer Ventilsitzfläche 53 zu einem ersten inneren Dichtsitz 54 zusammen. Ein zweiter Ventilschließkörper 55 wirkt mit einer zweiten Ventilsitzfläche 56 zu einem zweiten äußeren Dichtsitz 57 zusammen. Der zweite Ventilschließkörper 55 stützt sich über eine Feder 58 gegen eine Zwischenplatte 59 des Ventilkörpers 49 ab.

Als Anschlag der Ventilnadel 51 dient ein umlaufender Bund 60 der Ventilnadel 51. Der Gegenanschlag des zweiten Ventilschließkörpers 55 ist eine zirkulare Nut 61 in einer inneren Bohrung 62 des zweiten Ventilschließkörpers 55, durch die die Ventilnadel 51 durchgeführt ist. Der Brennstoffzulauf 63, hier durch einen Pfeil angedeutet, erfolgt umfangsmäßig außerhalb der Ventilnadel 51 und des ersten Ventilschließkörpers 52 und radial innerhalb des zweiten Ventilschließkörpers 55 z. B. in einem Spalt oder einer oder mehrerer Nuten zwischen diesen beiden Ventilschließkörpern 52,55. Ein weiterer Brennstoffzulauf zu äußeren Abspritzbohrungen 64, die im Ventilsitzkörper 50 angeordnet sind, besteht radial außerhalb des zweiten Ventilschließkörpers 55 von einem Umgebungsraum 71 aus.

Gegenüber dem Brennstoffzulauf 63 wird ein erster innerer Lochkreis 65 bestehend aus Abspritzbohrungen 64 durch den ersten Dichtsitz 54 abgedichtet. Ein zweiter äußerer Lochkreis 66 aus Abspritzbohrungen 64 wird von dem zweiten äußeren Dichtsitz 57 gegenüber dem Brennstoffzulauf 63 abgedichtet. Der zweite Ventilschließkörper 55 weist an einer dritten Ventilsitzfläche 68, die im Ventilsitzkörper 50 angeordnet ist, einen dritten Dichtsitz 69 auf, der den zweiten Lochkreis 66 gegenüber dem Umgebungsraum 71, der mit Brennstoff angefüllt ist, abdichtet. Es ist eine weitere Abspritzbohrung 64 als eine zentrale Abspritzbohrung 67 im Ventilsitzkörper 50 vorgesehen.

Wird die Ventilnadel 51 durch den nicht dargestellten Aktor angehoben und ist der Hub kleiner als der Teilhub h₁, so wird nur die Ventilnadel 51 angehoben und der erste Dichtsitz 54 freigegeben. Allein die Abspritzbohrungen 64 des ersten Lochkreises 65 und der zentral gerichteten Abspritzbohrung 67 sind nun mit dem Brennstoffzulauf 63 verbunden. Wird der Aktor so weit betätigt, daß der Hub der Ventilnadel 51 größer als der Teilhub h₁ ist, so wird der zweite Ventilschließkörper 55 über den Bund 60, der an die Nut 61 in der Bohrung 62 anschlägt, mitgenommen. Der zweite Dichtsitz 57 wird nun gegenüber dem Brennstoffzulauf 63 und der dritte Dichtsitz 69 gegenüber dem Umgebungsraum 71 freigegeben. Das Strahlbild des Brennstoffeinspritzstrahls kann nun, wenn der zweite Lochkreis 66 einen größeren Abspritzwinkel gegenüber einer Längsachse 70 aufweist, aufgeweitet werden.

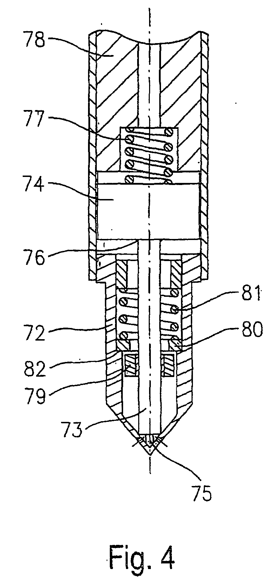

Fig. 4 zeigt stark schematisiert im ausschnittsweisen Querschnitt ein Brennstoffeinspritzventil. In einem Ventilkörper 72 ist eine Ventilnadel 73 angeordnet, die mit einem Anker 74 durch eine Schweißnaht 76 verbunden ist. Aus der Ventilnadel 73 steht ein zweiter Ventilschließkörper 75 ähnlich der Ausführung gemäß Fig. 2 vor. Die Ventilnadel 73 ist über den Anker 74 durch eine Feder 77 mit einer Vorspannungskraft beaufschlagt. An die Feder 77 schließt sich der Kern 78 eines elektromagnetischen Aktors an, dessen Spule hier nicht gezeigt ist. Um die Ventilnadel 73, mit dieser fest verbunden, ist ein Stopring 79 angeordnet. Im Ventilkörper 72 verschiebbar und sich gegen eine Abstufung 82 im Ventilkörper 72 abstützend ist ein Anschlagring 80, der durch eine zweite Feder 81 gegen diese Abstufung 82 gedrückt wird, angeordnet. Wenn durch den Aktor der Anker 74 und die Ventilnadel 73 angezogen werden, so schlägt nach einem bestimmten Hub der Stopring 79 gegen den Anschlagring 80. Um die Ventilnadel 73 weiter anzuziehen, muß zusätzlich die Kraft der Feder 81 überwunden werden.

Durch diese Ausführung können zwei verschiedene Hubbereiche sehr gut regelbar unterschieden werden. Insbesondere ist es möglich, zwei Öffnungszustände des Brennstoffeinspritzventils gut regelbar zu unterscheiden, wenn der Hub, nach welchem der Stopring 79 an dem Anschlagring 80 zum Anliegen kommt, so gewählt wird, daß dieser dem Teilhub h₁ der Fig. 2 entspricht.

## Patentansprüche

1. Brennstoffeinspritzventil, insbesondere Einspritzventil für Brennstoffeinspritzanlagen von Brennkraftmaschinen, mit einem Aktor (10), der mit einer Ventilnadel (51) zusammenwirkt, wobei ein an der Ventilnadel (51) angeordneter erster Ventilschließkörper (52) mit einer ersten Ventilsitzfläche (53) an einem Ventilsitzkörper (50) zu einem ersten Dichtsitz (54) zusammenwirkt, und mit einem zweiten Ventilschließkörper (55), der mit einer zweiten Ventilsitzfläche (56) an dem Ventilsitzkörper (50) zu einem zweiten Dichtsitz (57) zusammenwirkt, wobei die Ventilnadel (51) oder der erste Ventilschließkörper (52) einen Anschlag aufweist, an dem nach einem Teilhub (h 1) der Ventilnadel (51) ein Gegenanschlag des zweiten Ventilschließkörpers (55) anschlägt und den zweiten Ventilschließkörper (55) bei weiterem Hub der Ventilnadel (51) aus dem zweiten Dichtsitz (57) anhebt, und wobei der Ventilsitzkörper (50) einen ersten umfänglichen Lochkreis (65) mit mehreren Abspritzbohrungen (64) aufweist, die in dem Ventilsitzkörper (50) so angeordnet sind, daß der erste Dichtsitz (54) den ersten Lochkreis (65) gegenüber einem Brennstoffzulauf (63) abdichtet,
**dadurch gekennzeichnet,**
**daß** der zweite Ventilschließkörper (55) die Ventilnadel (51) oder den ersten Ventilschließkörper (52) umgibt.

2. Brennstoffeinspritzventil nach Anspruch 1,
**dadurch gekennzeichnet,**
**daß** ein erster Brennstoffzulauf (63) zu dem ersten Dichtsitz (54) umfangsmäßig außerhalb der Ventilnadel (51) und des ersten Ventilschließkörpers (52) und radial innerhalb des zweiten Ventilschließkörpers (55) erfolgt.

3. Brennstoffeinspritzventil nach Anspruch 2,
**dadurch gekennzeichnet,**
**daß** der Brennstoffzulauf (63) durch einen Spalt oder eine oder mehrere Nuten zwischen den beiden Ventilschließkörpern (52, 55) gebildet ist.

4. Brennstoffeinspritzventil nach einem der vorhergehenden Ansprüche,
**dadurch gekennzeichnet,**
**daß** der zweite Ventilschließkörper (55) von dem ersten Ventilschließkörper (52) geführt ist und durch eine Feder (58), die sich gegen eine Federaufnahme des Brennstoffeinspritzventils abstützt, gegen den zweiten Dichtsitz (57) vorgespannt ist und
**daß** ein zweiter umfänglicher Lochkreis (66) mit mehreren Abspritzbohrungen (64) so angeordnet ist, daß der zweite Dichtsitz (57) den zweiten Lochkreis (66) radial innen und ein dritter Dichtsitz (69), der von dem zweiten Ventilschließkörper (55) mit dem Ventilsitzkörper (50) an einer dritten Ventilsitzfläche (68) gebildet wird, den zweiten Lochkreis (66) radial außen gegenüber einem weiteren Brennstoffzulauf abdichtet.

5. Brennstoffeinspritzventil nach Anspruch 4,
**dadurch gekennzeichnet,**
**daß** der weitere Brennstoffzulauf zu den äußeren Abspritzbohrungen (64) radial außerhalb des zweiten Ventilschließkörpers (55) von einem Umgebungsraum (71) des Brennstoffeinspritzventils aus besteht.

6. Brennstoffeinspritzventil nach Anspruch 4,
**dadurch gekennzeichnet,**
**daß** der Anschlag der Ventilnadel (51) oder des ersten Ventilschließkörpers (52) ein umlaufender Bund (60) und der Gegenanschlag des zweiten Ventilschließkörpers (55) eine Nut (61) in einer Bohrung (62) sind, durch die der erste Ventilschließkörper (52) bzw. die Ventilnadel (51) den zweiten Ventilschließkörper (55) durchdringt.

7. Brennstoffeinspritzventil nach Anspruch 4 oder 6,
**dadurch gekennzeichnet,**
**daß** die Abspritzbohrungen (64) des ersten Lochkreises (65) zu den Abspritzbohrungen (64) des zweiten Lochkreises (66) unterschiedliche Abspritzwinkel aufweisen.

8. Brennstoffeinspritzventil nach einem der vorhergehenden Ansprüche,
**dadurch gekennzeichnet,**
**daß** der erste Ventilschließkörper (52) und der zweite Ventilschließkörper (55) koaxial angeordnet sind.

9. Brennstoffeinspritzventil nach einem der vorhergehenden Ansprüche,
**dadurch gekennzeichnet,**
**daß** der Ventilsitzkörper (50) eine zentrale Abspritzbohrung (67) aufweist.

## Claims

1. Fuel injection valve, in particular injection valve for fuel injection systems of internal combustion engines, having an actuator (10) which interacts with a valve needle (51), a first valve-closing body (52), which is arranged on the valve needle (51), interacting with a first valve seat surface (53) on a valve seat body (50) to form a first sealing seat (54), and having a second valve-closing body (55) which interacts with a second valve seat surface (56) on the valve seat body (50) to form a second sealing seat (57), the valve needle (51) or the first valve-closing body (52) having a stop against which, after a partial travel (h1) of the valve needle (51), a mating stop of the second valve-closing body (55) strikes and, on further travel of the valve needle (51), raises the second valve-closing body (55) from the second sealing seat (57), and the valve seat body (50) having a first circumferential hole circle (65) with a plurality of spray-discharge bores (64) which are arranged in the valve seat body (50) in such a manner that the first sealing seat (54) seals off the first hole circle (65) from a fuel intake (63), **characterized in that** the second valve-closing body (55) surrounds the valve needle (51) or the first valve-closing body (52).

2. Fuel injection valve according to Claim 1, **characterized in that** a first fuel intake (63) to the first sealing seat (54) takes place circumferentially outside the valve needle (51) and the first valve-closing body (52) and radially within the second valve-closing body (55).

3. Fuel injection valve according to Claim 2, **characterized in that** the fuel intake (63) is formed by a gap or by one or more grooves between the two valve-closing bodies (52, 55).

4. Fuel injection valve according to one of the preceding claims, **characterized in that** the second valve-closing body (55) is guided by the first valve-closing body (52) and is prestressed against the second sealing seat (57) by a spring (58), which is supported against a spring mount of the fuel injection valve, and **in that** a second circumferential hole circle (66) having a plurality of spray-discharge bores (64) is arranged in such a manner that the second sealing seat (57) seals off the second hole circle (66) radially on the inside, and a third sealing seat (69), which is formed by the second valve-closing body (55) together with the valve seat body (50) on a third valve seat surface (68), seals off the second hole circle (66) radially on the outside, from a further fuel intake.

5. Fuel injection valve according to Claim 4, **characterized in that** the further fuel intake to the outer spray-discharge bores (64) radially outside the second valve-closing body (55) comprises a surrounding space (71) around the fuel injection valve.

6. Fuel injection valve according to Claim 4, **characterized in that** the stop of the valve needle (51) or of the first valve-closing body (52) is an encircling collar (60) and the counterstop of the second valve-closing body (55) is a groove (61) in a bore (62) through which the first valve-closing body (52) or the valve needle (51) penetrates the second valve-closing body (55).

7. Fuel injection valve according to Claim 4 or 6, **characterized in that** the spray-discharge bores (64) of the first hole circle (65) have different spray-discharge angles from the spray-discharge bores (64) of the second hole circle (66).

8. Fuel injection valve according to one of the preceding claims, **characterized in that** the first valve-closing body (52) and the second valve-closing body (55) are arranged coaxially.

9. Fuel injection valve according to one of the preceding claims, **characterized in that** the valve seat body (50) has a central spray-discharge bore (67).

## Revendications

1. Injecteur de carburant, notamment injecteur pour installations d'injection de carburant de moteurs à combustion interne, comprenant un induit (10) coopérant avec une aiguille de soupape (51), un premier corps de fermeture de soupape (52) disposé sur l'aiguille de soupape (51) coopérant avec une première surface de siège de soupape (53) sur un corps de siège de soupape (50) pour former un premier siège d'étanchéité (54), et avec un deuxième corps de fermeture de soupape (55) coopérant avec une deuxième surface de siège de soupape (56) sur le corps de siège de soupape (50) pour former un deuxième siège d'étanchéité (57), l'aiguille de soupape (51) ou le premier corps de fermeture de soupape (52) présentant une butée contre laquelle vient s'appliquer une contre-butée du deuxième corps de fermeture de soupape (55) après une course partielle (hl) de l'aiguille de soupape (51) et soulevant le deuxième corps de fermeture de soupape (55) du deuxième siège d'étanchéité (57) lorsque la course se poursuit, le premier corps de siège de soupape (50) présentant un premier cercle de trous (65) périphérique avec plusieurs perçages d'éjection (64) disposés dans le corps de siège de soupape (50) de telle sorte que le premier siège d'étanchéité (54) rend étanche le premier cercle de trous (65) par rapport à une arrivée de carburant (63),
**caractérisé en ce que**
le deuxième corps de fermeture de soupape (55) entoure l'aiguille de soupape (51) ou le premier corps de fermeture de soupape (52).

2. Injecteur de carburant selon la revendication 1,
**caractérisé en ce qu'**
une première arrivée de carburant (63) s'étend vers le premier siège d'étanchéité (54) de façon périphérique à l'extérieur de l'aiguille de soupape (51) et du premier corps de fermeture de soupape (52), et de façon radiale à l'intérieur du deuxième corps de fermeture de soupape (55).

3. Injecteur de carburant selon la revendication 2,
**caractérisé en ce que**
l'arrivée de carburant (63) est formée par une fente ou une ou plusieurs rainures entre les deux corps de fermeture de soupape (52, 55).

4. Injecteur de carburant selon l'une quelconque des revendications précédentes,
**caractérisé en ce que**
le deuxième corps de fermeture de soupape (55) est guidé par le premier corps de fermeture de soupape (52) et précontraint contre le deuxième siège d'étanchéité (57) par un ressort (58) qui prend appui contre un logement de ressort de l'injecteur de carburant, et un deuxième cercle de trous (66) périphérique avec plusieurs perçages d'éjection (64) est disposé de telle sorte que le deuxième siège d'étanchéité (57) rend étanche le deuxième cercle de trous (66) radialement à l'intérieur, et un troisième siège d'étanchéité (69), formé par le deuxième corps de fermeture de soupape (55) avec le corps de siège de soupape (50) sur une troisième surface de siège de soupape (68), rend étanche le deuxième cercle de trous (66) radialement à l'extérieur par rapport à une autre arrivée de carburant.

5. Injecteur de carburant selon la revendication 4,
**caractérisé en ce que**
l'autre arrivée de carburant vers les perçages d'éjection (64) extérieurs s'étend radialement à l'extérieur du deuxième corps de fermeture de soupape (55) à partir d'une chambre périphérique (71) de l'injecteur de carburant.

6. Injecteur de carburant selon la revendication 4,
**caractérisé en ce que**
la butée de l'aiguille de soupape (51) ou du premier corps de fermeture de soupape (52) est un collet périphérique (60) et la contre-butée du deuxième corps de fermeture de soupape (55) est une rainure (61) dans un alésage (62) par lequel le premier corps de fermeture de soupape (52) ou l'aiguille de soupape (51) traverse le deuxième corps de fermeture de soupape (55).

7. Injecteur de carburant selon la revendication 4 ou 6,
**caractérisé en ce que**
les perçages d'éjection (64) du premier cercle de trous (65) présentent des angles d'éjection différents par rapport aux perçages d'éjection (64) du deuxième cercle de trous (66).

8. Injecteur de carburant selon l'une quelconque des revendications précédentes,
**caractérisé en ce que**
le premier corps de fermeture de soupape (52) et le deuxième corps de fermeture de soupape (55) sont coaxiaux.

9. Injecteur de carburant selon l'une quelconque des revendications précédentes,
**caractérisé en ce que**
le corps de siège de fermeture (50) présente un perçage d'éjection central (67).
